# EUROPEAN PATENT SPECIFICATION

(11) **EP 1 190 778 B1**
(45) Date of publication and mention of the grant of the patent: **30.06.2004**
(21) Application number: 00830635.9
(22) Date of filing: 25.09.2000
(51) Int. Cl.: B07B 13/00, A21C 15/00

(54) **Method and apparatus for sorting warped toasted bread slices**
Verfahren und Vorrichtung zum Sortieren von verbogenen Röstschnitten
Méthode et dispositif pour trier des tranches de pain grillé tordues

(43) Date of publication of application: 27.03.2002
(73) Proprietor: BARILLA ALIMENTARE S.P.A., 43100 Parma (IT)
(72) Inventor: Corradi, Ernestino, 43100 Parma (IT)
(74) Representative: Ferreccio, Rinaldo

(56) References cited:
- FR-A- 2 340 685
- FR-A- 2 431 955

## Description

### Field of the Invention

This invention broadly relates to a method of handling toasted bread slices on their way to packaging, that is over that segment of the slice processing line which lies between the slice toasting oven and the toasted slice packaging station.

In particular, the invention relates to a method for automatically rejecting, on a continual basis, faulty toasted slices from rows of toasted slices which are being conveyed, continually in a side-by-side relationship, to the packaging station, wherein a routed stream of a plurality of rows of toasted slices, proceeding beside one another and including regular as well as faulty slices, are fed forward continually along a predetermined direction of advance.

The invention also relates to an apparatus implementing this method.

### Background of the Invention

The expression "faulty toasted slices" is used throughout this specification and the appended claims to indicate slices which either exit a respective toasting oven in a devious setting from the layout of parallel rows in which they went through the oven, or depart from the traditional flattened shape of regular toasted slices, e.g. show a concave or a convex shape relative to the conveyor surface, or cling together in partially or fully overlapping pairs.

As is known, toasted slices leave a continuous toasting oven arrayed on a belt conveyor in more or less straight parallel rows and substantially tight courses, and are fed -- in this which is the layout that they maintained while going through the oven -- to a channeled chute which slopes down in the direction of advance of the slices, for delivery of the slices by gravity onto a transport system, itself a channeled one. This transport system provides to send the toasted slices, still in parallel rows, to one or more packaging stations.

The above channeled transport system comprises basically a plurality of parallel belt sub-conveyors (one per each row of slices) held apart by a corresponding plurality of flat bars which are laid edgewise, span the length of the sub-conveyors in the direction of advance of the slices, and are supported on the transport system stationary frame.

### Prior Art

It is a recognized fact that not all the slices would come out of the toasting oven in a desired shape and texture, that is, in the substantially flat rectangular shape they had when cut off their parent cake. In fact, a substantial proportion of the slices may exhibit faults, in the form of slices partially overlapping each other in pairs, or of distorted, misaligned, cracked slices, or else. Faulty slices can easily create obstructions in the general path toward the packaging station and clog their respective processing lines. This almost invariably results in the affected processing line having to be stopped, and the processed slices through the oven having to be diverted to large temporary storage units. To overcome this problem, it has been necessary to station a number of operators along the processing lines, to single out and remove manually the faulty slices as well as to re-arrange the regular slices, also manually. However, this human intervention is recognized to introduce unevenness in the delivery of regular toasted slices to the packaging station, with the consequence of hindering full automation of the toasted slice processing lines through to their packaging machinery.

The underlying technical problem of this invention is to provide a method and an apparatus for automatically singling out and rejecting faulty toasted slices from rows of toasted slices being conveyed to the packaging station on a continuous basis, which method and apparatus have functional and structural features appropriate to make recourse to labour for such operations unnecessary, and to ensure uniformity in the toasted slice arrival at the packaging station, thereby enabling automation of a toasted slice processing line from the toasting oven through to the packaging station.

### Summary of the Invention

This problem is solved, according to the invention, by a method according to claim 1 and by an apparatus according to claim 4.

The features and advantages of the method and the apparatus of this invention will be apparent from the following description of embodiments thereof, given by way of non-limitative examples with reference to the accompanying drawings.

In the drawings:

### Brief Description of the Drawings

- Figure 1 is a schematic perspective view of the apparatus according to the invention.
- Figure 2 is a schematic side view of the apparatus shown in Figure 1.
- Figure 3 is a schematic perspective view of a detail of the apparatus shown in Figure 1.
- Figure 4 is a perspective view of another detail of the apparatus shown in Figure 1.
- Figure 5 is an enlarged cutaway view of a construction detail of Figure 4.
- Figure 6 is a schematic sectional view taken along line VI-VI in Figure 5.
- Figure 7 is a schematic sectional view taken along line VII-VII in Figure 5.
- Figures 8 to 11 illustrate schematically sequential steps of the method according to the invention as implemented by the apparatus of Figures 1 to 7.

### Detailed Description

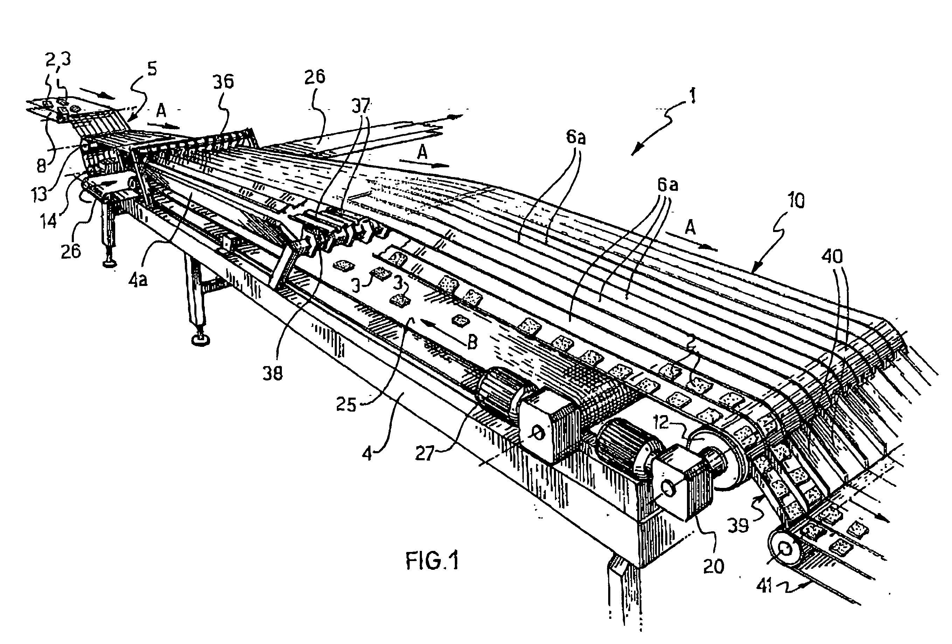

With reference to the drawings and in particular to the example of Figure 1, an apparatus for handling toasted slices on their way to packaging, according to this invention, is shown generally at 1 in schematic form.

More particularly, the apparatus 1 is operative to automatically single out, for rejection on a continual basis according to the method of the present invention, any faulty toasted slices 3 from side-by-side rows of toasted slices which are moving continuously along a direction A of advance, from a toasting oven to a packaging station, neither of which are shown because conventional.

Through the remainder of this description and the appended claims, the terms "upstream" and "downstream" should be understood as referred to said direction A.

The apparatus 1 of this invention is also operative to line up any of the rows 2, 3 of toasted slices which exit the toasting oven in a devious setting from the desired layout of tiers aligned to the direction of advance, thereby meeting the engineering requirements for possible automated packaging equipment.

Advantageously, the apparatus 1 forms a segment of a slice processing line which stretches between a slice toasting oven and a respective packaging station.

As said before, toasted slices 3 will be regarded, through the remainder of this description, to be faulty if they leave the toasting oven in a shape other than the traditional flattened shape of so-called "regular" toasted slices, e.g. in a concave or a convex shape relative to the conveyor surface, or if they have become paired so as to partly or fully overlap each other.

The toasted slices 2, 3 leave the continuous toasting oven arrayed on a belt conveyor 8 in approximately parallel and straight side-by-side rows and substantially tight courses. The slice rows 2, 3 having gone through the oven with that lay, are fed onto a channeled chute 5 which slopes down in the direction A of advance of the slices and delivers the slices to the apparatus 1 by gravity.

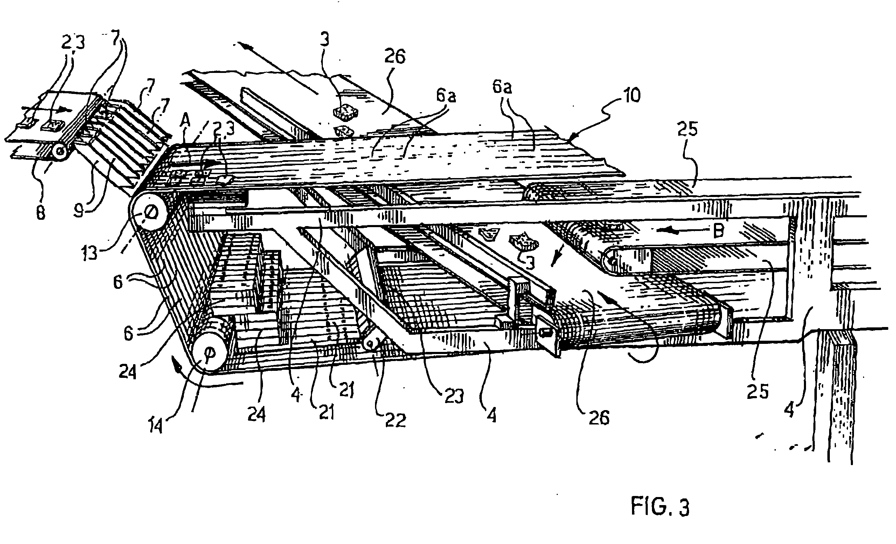

In more detail (Figure 3), the channeled chute 5 comprises a plurality of contiguous lanes 7 which are substantially channel-shaped and have inlet ends placed at the terminal edge of the belt conveyor 8 and opposed discharge ends placed close to the apparatus 1. The lanes 7 are defined by longitudinal side rails 9 set to diverge (substantially fan-like) from one another, so that their discharge ends open out to spread the slice rows 2, 3 onto the apparatus 1 more readily, as explained hereinafter.

The apparatus 1 comprises, located downstream of the channeled chute 5, a plurality of endless belt conveyors 6 which are flexible and extend parallel to and independently of one another. These belt conveyors have respective slice-carrying or working runs 6a which are driven along a path of travel in the direction A of advance, said slice-carrying runs 6a extending side-by-side with their upstream ends placed each in substantial continuation of the discharge end of a lane 7 of said channeled chute 5. Since the width of said belts 6 would be the same as or slightly greater than that of a toasted slide, that is, a width quite small compared to belt conveyors commonly employed in the food processing industry, the belt conveyors 6 will be referred to as the "small belts" throughout the remainder of this description.

The small belts 6 jointly form an endless belt type of transport, generally designated 10, which is supported on a stationary main frame 4, between a pair of side frames 4a of the latter, and is driven in the direction A of advance of the slices toward the packaging station, as explained hereinafter.

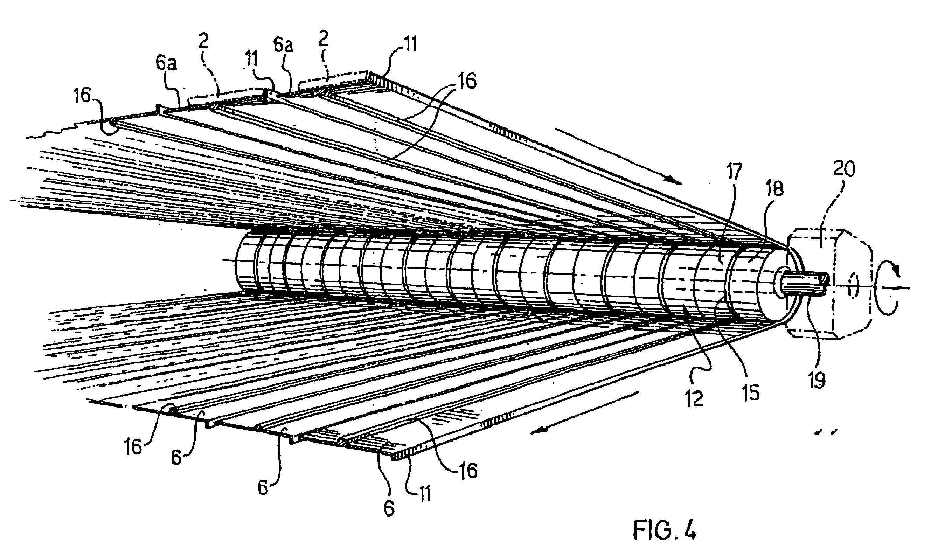

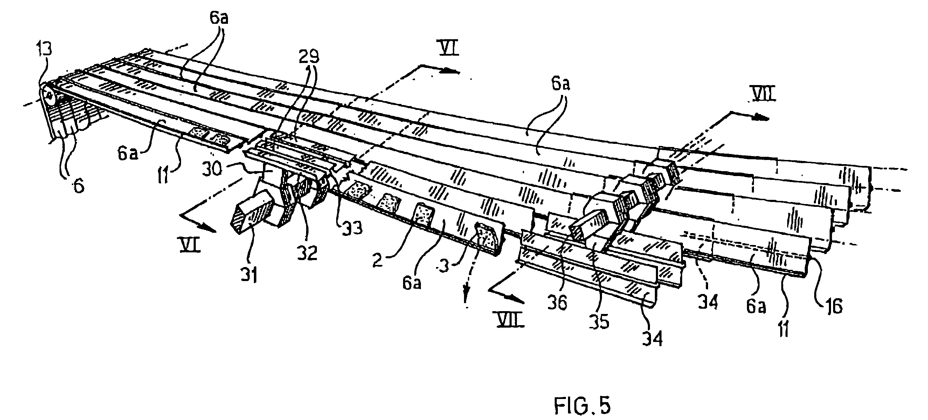

Advantageously (Figures 4 and 5), each small belt 6 has a continuous abutment edge 11 formed along one side which defines a ridge set substantially on the square. The small belts 6 are mounted with their edges 11 disposed all on the same side and facing up from the upper runs (the slice-carrying or working runs 6a).

The width dimension of the small belts is selected to comfortably accommodate the toasted slices 2, 3 lined up one behind another thereon. The height dimension of the abutment edges 11 matches or slightly exceeds the thickness dimension of said slices 2, 3.

As explained hereinafter, the continuous abutment edges 11 cooperate in aligning the toasted slices onto the small belts 6 as well as in picking out and rejecting the faulty slices 3.

Each small belt 6 is preferably driven through a set of pulleys 12, 13, 14 of which at least one is a driving pulley, the others being riding, deflecting and tightening pulleys.

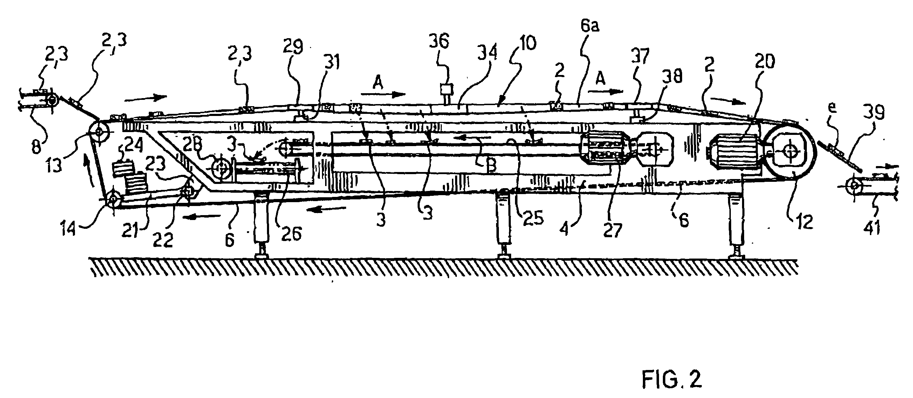

In a preferred but not limitative embodiment (Figure 2), each small belt 6 is supported and driven by a large-diameter driving pulley at its downstream end, and at its upstream end, is simply carried and tensioned by idler pulleys 13, 14 having a smaller diameter than the driving pulley 12 and being spaced apart a greater distance than said diameter, so that the small belt 6 describes essentially a triangular closed loop.

Advantageously, the pulleys 12, 13 and 14 have a knurled surface and are formed centrally and coaxially (Figure 4) with a circular groove or race 15 for engagement by a longitudinal truing rib 16 provided on the underside of each small belt 6.

More particularly, each driving pulley 12 comprises a split pulley body, 17 and 18, keyed to a shaft 19 which spans the plurality of small belts 6 and is driven by an electric motor 20. The axial spacing of the pulley body portions 17, 18 corresponds to the width of said circular groove 15 engaging the truing rib 16 on the corresponding small belt 6.

To keep the small belts 6 properly tightened during operation of the apparatus 1 according to this invention, and especially to accommodate any load variations, the pulley 14 (Figures 2 and 3) of each small belt 6 is rotatably supported at the free upstream end of a cantilever arm 21 jutting from a crosspiece 23 of the frame 4 in the direction A of advance of the slices. In particular, the downstream end of said arm 21 is mounted on a pivot pin 22 lying parallel to the axis of the pulley 14 and being supported on said crosspiece 23 in axial alignment to the other pivot pins 22 of the plurality of pulleys 14.

An appropriate counterweight 24 is adjustable in position on each arm 21, so that the tension of the small belts 6 can be adjusted on an individual basis.

A belt conveyor 25 is provided beneath the working runs 6a of the small belts 6, and is conventionally supported for movement in an opposite direction B from the direction A of advance of said small belts 6. This belt conveyor 25 has substantially the same width as the transport 10 (comprising the plurality of small belts 6), and is intended for picking up faulty toasted slices 3 which have been rejected in accord with the method according to the invention.

An additional conveyor 26 extends crosswise beneath the belt conveyor 25, at the upstream end thereof, and is operative to receive the faulty slices 3 unloaded from the conveyor 25 and move them out to one side of the apparatus 1. Motors 27 and 28 are arranged to drive said belt conveyors 25 and 26, respectively.

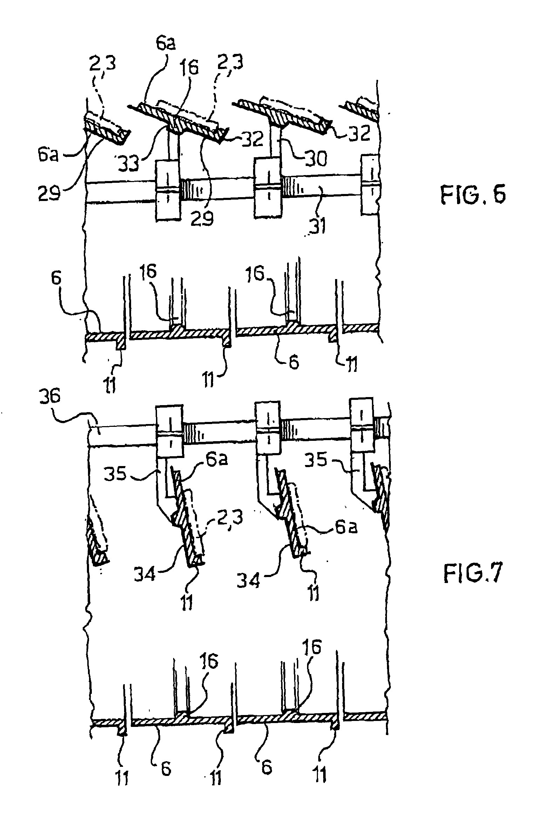

According to a further characterizing feature of this invention, the apparatus 1 comprises a plurality of substantially plate-like tracks 29 (Figure 5 and 7), one track per small belt 6, which tracks are carried on respective upright arms 30 bearing on a single bridge-like crosspiece 31 of said frame 4 extending under the working runs 6a of said small belts 6. In particular, said crosspiece 31, along with the plurality of tracks 29 associated therewith, is advantageously positioned at about one quarter length of the small belts 6 from their upstream ends. The plate-like tracks 29 are identical with and parallel to one another. They are essentially rectangular in shape, with the long sides extending in the same direction as the direction A of advance, and have predetermined limited length and width matching substantially those of said small belts 6. Each plate-like track 29 has an edge 32 set on the square at its long side, which edge is similar to the abutment edges 11 of the small belts 6 which it engages in a manner to be described. A groove 33 of appropriate width and depth is provided at the middle of each tack 29 to engage in a sliding manner the rib of a corresponding small belt 6.

The plate-like tracks 29 are fixedly held on the side carrying the edge 32, all with the same inclination angle to the horizontal, at a slightly higher level than the upstream ends of the working runs 6a of said small belts 6. In particular, the tracks 29 extend at a slant angle of 15° to 30°, preferably of about 30°, to the horizontal.

Each plate-like track 29 engages a respective one of the small belts 6 from below, along the working run 6a thereof, thereby forcing the latter into the same slanted position. Said working runs 6a are gradually brought to this setting (about 30°) by a continuous deflection movement from the horizontal setting of their upstream ends. It should be noted that this deflection movement of the working runs 6a creates, between working runs, gaps of increasing width with the increase of the inclination angle, so that the working runs are brought from a flanking to a spaced-apart relationship with one another. It should be further noted that the aforementioned "high" position setting of said tracks 29 will supplement the tightening action applied to the working runs 6a of the small belts 6 by the pulleys 24.

The apparatus 1 further comprises a second plurality of plate-like tracks 34, construction- and function-wise similar to the tracks 29 just described. These tracks 34 are supported on a bridge-like crosspiece 36 extending above the plurality of small belts 6, through respective arms 35. The tracks 34 extend along the direction A of advance, are set in sub-vertical positions, preferably at an angle of at least 80° to the horizontal, and are supported at a higher level than the former tracks 29. Said tracks 34 engage the working runs 6a of the small belts 6 from below, to further tighten them and set them at an angle of inclination of about 80°. Similar as in the former case, the 80-degree inclination is obtained by a gradual and continuous deflection of said working runs 6a in the same direction as the former, relative to the tracks 29. At said 80-degree slanted position setting, the spacing of the working runs 6a is larger, resulting in a larger gap being formed between working runs than the width of the toasted slices 2, 3. The tracks 34 are placed approximately halfway down the overall length of the small belts 6.

A third plurality of plate-like tracks 37 (Figure 1), identical with the tracks 29 described above, are supported at approximately three quarters the overall length of the small belts 6 from their upstream ends. Said tracks 37 are preferably slanted to the horizontal similar as the tracks 29 (preferably, at a 30-degree angle), and are held at the same level as these by a respective bridge-like crosspiece 38 extending under the plurality of working runs 6a.

It should be noted that the working runs 6a of said small belts 6 are restored, through said tracks 37, to an inclination angle of about 30° to the horizontal by a gradual and continuous deflection in the opposite direction from the former, starting at the tracks 34, and that this deflection is continued downstream of said tracks 37, still in a gradual fashion by said working runs 6a engaging the respective driving pulleys 12, to ultimately attain a horizontal position setting.

At the downstream end of the apparatus 1, it is placed a channeled chute 39 whose lanes 40 are arranged to receive toasted slices 2 from the respective working runs 6a of said small belts 6 and deliver them onto a feed transport 41 of a packaging machine.

An implementation of the method according to the invention on the above-described apparatus will now be described by way of example.

A routed stream of toasted slices 2, 3, including regular and faulty toasted slices exiting a toasting oven, is fed continuously along a predetermined direction A of advance to a transport 10 comprising a plurality of small belt conveyors 6, 6a, one belt conveyor per row of slices.

Since the method of singling out and rejecting faulty slices in accord with the invention is the same and similarly applied to each row of slices in said stream, it will be described for just one of these rows of slices.

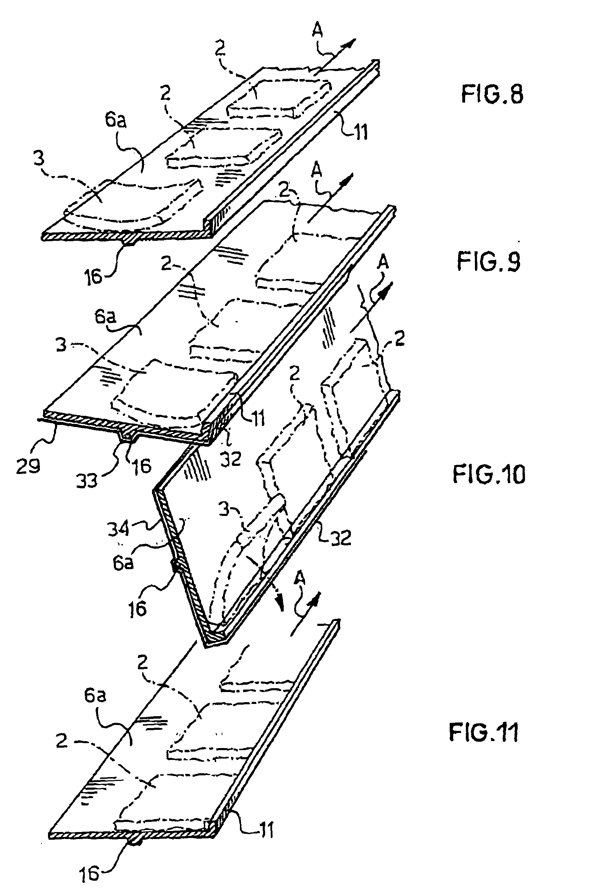

The slices 2, 3 in the one row under consideration, directly after reaching their respective small belt 6, 6a, provided with an edge 11 on the square along one side, are lined up on it. For the purpose, said small belt 6 (or rather its working run 6a) is deflected about a parallel axis to said direction A of advance so as to slope (gradually and continuously) downward in the direction of the abutment edge 11. The slices 2, 3 will crowd together against said edge (Figures 8, 9) into a straight line, as desired.

The deflection of the small belt 6a is continued, about the same axis and in the same direction, until it attains a sub-vertical inclination angle of about 80°. During this deflection, and positively upon attaining said inclination angle, only the faulty slices will have their centers of gravity located outside said abutment edge 11, so that said slices are dropped out of the small belt 6a, whereas the regular slices are held on the transport against the edge 11 (Figure 10).

The aforementioned sub-vertical slanted position setting is maintained for a predetermined length of time (through a given segment of the conveyor 6a path of travel) to ensure that all the faulty slices 3 are rejected from said stream.

Having thus picked out and rejected the faulty slices, the small belt 6a is deflected, about the same axis but in the opposite direction from the previous deflections, to bring the regular slices left thereon back to a horizontal position.

The rejected toasted slices are loaded onto conveyors 25, 26, provided beneath the small belt 6a in question, and are removed from the apparatus. It should be noted in this respect that said small belts 6a, in their movement toward their steepest setting, also move away from one another to create a wider gap than the width of the toasted slices wherethrough said faulty slices can be dropped onto the conveyor 25.

The apparatus and method of this invention do solve the previously stated technical problem, and offer a number of advantages, of which a first is that the packaging machines are ensured a uniform delivery of regular toasted slices only. This enables the slice processing lines to be fully automated, from the toasting oven through to the packaging station.

Another major advantage is that the faulty toasted slices are all rejected in an automatic manner, without the assistance of purposely detached personnel or any complicated arrangements or devices.

## Claims

1. A method of handling toasted slices (2, 3) on their way to packaging for rejecting, automatically on a continual basis, faulty toasted slices (3) from rows of toasted slices (2, 3) being conveyed, continually in a side-by-side relationship, to packaging, wherein a routed stream of a plurality of rows of toasted slices proceeding beside one another and including regular slices (2) as well as faulty slices (3) are fed forward continually along a predetermined direction of advance, comprising the following steps:
- starting each row of toasted slices (2,3) of said continual stream onto a slice-carrying working run (6a) of a respective flexible endless belt conveyor (6) driven along a path of travel in said direction A of advance and formed with an abutment edge (11) set on the square along at least one side thereof;
- subjecting said slice-carrying working run (6a) to a first deflection about a parallel axis (x-x) to said direction A of advance and through a first segment of its respective path of travel, so as to bring it, in a continuous and gradual manner, to a slanted position toward said abutment edge (11), into a substantially sub-vertical slant setting wherein only the centers of gravity of the faulty slices (3) lie outside said edge (11), thereby causing said slices (3) to drop out of said conveyor (6a) while the regular slices (2) are retained on said slice-carrying working run (6a) by the abutment edge itself;
- subjecting said slice-carrying working run (6a) to a second gradual and continuous deflection about said axis (x-x) in the opposite direction from said first deflection, and through a second segment of said path of travel extending downstream of said sub-vertical slanted position, to restore it to a substantially horizontal position.

2. A method according to Claim 1, **characterized in that** said sub-vertical position setting is at least 80°.

3. A method according to Claim 1, **characterized in that** said axis (x-x) belongs to the conveyor (6).

4. An apparatus (1) for automatically singling out and rejecting faulty toasted slices (3) from parallel rows of slices (2, 3) driven continually along a predetemined direction of advance toward a packaging station, which apparatus comprises a plurality of flexible endless belt conveyors (6) having a slice-carrying working run (6a) which extends along a substantially horizontal path of travel, said conveyors (6) being provided with an abutment edge (11) set on the square along at least one side thereof, each slice-carrying run (6a) lying, at least through a segment of said path of travel, in a sub-vertical position slanted toward said side formed with the abutment edge (11), and means (29,34) being provided for holding and guiding each slice-carrying run (6a) along said segment of the path of travel in a slanted position setting.

5. An apparatus according to Claim 4, **characterized in that** said slant angle is approximately 80° to the horizontal.

6. An apparatus according to Claim 4, **characterized in that** said means comprises a plurality of plate-like tracks (34), substantially rectangular in shape, having their long sides laid in the direction (A) of advance and formed with abutment edges (11).

7. An apparatus according to Claim 6, **characterized in that** said tracks have an inclination angle of about 80°.

8. An apparatus according to Claim 6, **characterized in that** said tracks are supported, at approximately halfway the travel path, on a bridge-like crosspiece extended on the plurality of said slice-carrying working runs (6a).

9. An apparatus according to Claim 4, **characterized in that** said means further comprises second and third pluralities of plate-like tracks (29,37) supporting said slice-carrying working runs (6a) supported on respective bridge-like crosspieces (31,38) extending under said working runs at points one quarter and three quarters down said travel path respectively.

10. An apparatus according to Claim 6, **characterized in that** said tracks are identical with those of the first plurality and set at an inclination angle of about 30° to the horizontal.

## Patentansprüche

1. Verfahren zum Handhaben von getoasteten Scheiben (2, 3) auf ihrem Weg zum Verpacken, um automatisch auf kontinuierlicher Basis fehlerhaft getoastete Scheiben (3) aus kontinuierlich in einer Seite-an-Seite Anordnung zum Verpacken geförderten Reihen getoasteter Scheiben (2, 3) auszuwerfen, wobei ein geleiteter Strom aus einer Vielzahl von Reihen getoasteter regulärer Scheiben (2) wie auch fehlerhafter Scheiben (3) kontinuierlich entlang einer vorbestimmten Förderrichtung gefördert wird, umfassend die folgenden Schritte:
- Aufgeben jeder Reihe getoasteter Scheiben (2, 3) des kontinuierlichen Stroms auf eine scheibentragende Arbeitsstrecke (6a) eines jeweiligen flexiblen Endlosbandförderers (6), der entlang eines Laufweges in der Förderrichtung A angetrieben ist und mit einem entlang einer Seite desselben im rechten Winkel angeordneten Randwiderlager (11) ausgebildet ist;
- Unterwerfen der scheibentragenden Arbeitsstrecke (6a) unter eine erste Ablenkung um eine parallele Achse (x-x) zur Förderrichtung A und über ein erstes Segment ihres jeweiligen Laufweges, um sie in kontinuierlicher und gradueller Weise in eine in Richtung des Randwiderlagers (11) gerichtete Schräglage bis zu einer subvertikalen Stellung zu bringen, bei der lediglich die Schwerpunkte der fehlerhaften Scheiben (3) außerhalb des Randes (11) liegen, wodurch die Scheiben (3) aus dem Förderer (6a) herausfallen, während die regulären Scheiben (2) von dem Randwiderlager selbst auf der scheibentragenden Arbeitsstrecke (6a) zurückgehalten werden;
- Unterwerfen der scheibentragenden Arbeitsstrecke (6a) unter eine zweite graduelle und kontinuierliche Ablenkung um die Achse (x-x) in entgegengesetzter Richtung zur ersten Ablenkung und über ein zweites Segment des Laufweges, das sich stromabwärts der subvertikalen Schräglage erstreckt, um es in eine im wesentlichen horizontale Lage zurückzuführen.

2. Verfahren nach Anspruch 1, **dadurch gekennzeichnet, daß** die subvertikale Lageeinstellung mindestens 80° beträgt.

3. Verfahren nach Anspruch 1, **dadurch gekennzeichnet, daß** die Achse (x-x) zum Förderer (6) zugehörig ist.

4. Vorrichtung (1) zum automatischen Aussortieren und Verwerfen von fehlerhaft getoasteten Schreiben (3) aus parallelen Reihen von Scheiben (2, 3), die kontinuierlich entlang einer vorbestimmten Förderrichtung zu einer Verpackungsstation gefördert werden, welche Vorrichtung eine Vielzahl von flexiblen Endlosbandförderern (6) mit einer scheibentragenden Arbeitsstrecke (6a) umfaßt, die sich entlang eines im wesentlichen horizontalen Laufweges erstreckt, wobei die Förderer (6) mit einem an mindestens einer Seite derselben und im rechten Winkel angeordneten Randwiderlager (11) ausgebildet sind und jede scheibentragende Arbeitsstrecke (6a) zumindest über ein Segment des Laufweges in einer subvertikalen Lage in Richtung auf die mit dem Randwiderlager (11) ausgebildete Seite schrägliegt ist und Mittel (29, 34) vorgesehen sind, um jede scheibentragende Arbeitsstrecke (6a) entlang des Segmentes des Laufweges in einer schrägen Lageeinstellung zu halten und zu führen.

5. Vorrichtung nach Anspruch 4, **dadurch gekennzeichnet, daß** der Schrägwinkel annährend 80° gegenüber der Horizontalen beträgt.

6. Vorrichtung nach Anspruch 4, **dadurch gekennzeichnet, daß** die Mittel eine Vielzahl von plattenartigen Schienen (34) umfassen, die eine im wesentlichen rechtwinklige Form aufweisen und deren lange Seiten in der Förderrichtung (A) liegen und mit Randwiderlagern (11) ausgebildet sind.

7. Vorrichtung nach Anspruch 6, **dadurch gekennzeichnet, daß** die Schienen einen Neigungswinkel von etwa 80° aufweisen.

8. Vorrichtung nach Anspruch 6, **dadurch gekennzeichnet, daß** die Schienen auf etwa halber Länge des Laufweges von einem brückenartigen Querstück getragen werden, das sich über die Vielzahl der scheibentragenden Arbeitsstrecken (6a) erstreckt.

9. Vorrichtung nach Anspruch 4, **dadurch gekennzeichnet, daß** die Mittel darüber hinaus zweite und dritte Vielzahlen von plattenartigen Schienen (29, 37) umfassen, die die scheibentragenden Arbeitsstrecken (6a) auf jeweiligen brückenartigen Querstücken (31, 38) abstützen, welche sich unterhalb der Arbeitsstrecken an Stellen von ein Viertel bzw. drei Viertel des Laufweges erstrecken.

10. Vorrichtung nach Anspruch 6, **dadurch gekennzeichnet, daß** die Schienen identisch zu denen der ersten Vielzahl sind und unter einem Neigungswinkel von etwa 30° zur Horizontalen gehalten sind.

## Revendications

1. Procédé de manipulation de tranches de pain grillé (2, 3) sur leur trajet vers le conditionnement, pour rejeter, de manière automatique et continue, des tranches défectueuses de pain grillé (3) depuis des rangées de tranches de pain grillé (2, 3) convoyées, en continu et côte à côte, vers le conditionnement, selon lequel un flux acheminé d'une pluralité de rangées de tranches de pain grillé, progressant les unes à côté des autres et comprenant des tranches convenables (2) et des tranches défectueuses (3), sont délivrées continuellement suivant une direction prédéterminée d'avancée, comprenant les étapes suivantes :
- lancer chaque rangée de tranches de pain grillé (2, 3) dudit flux continuel jusque sur une piste fonctionnelle de transport de tranches (6a) d'un convoyeur à courroie flexible sans fin respectif (6), entraîné suivant un trajet de déplacement dans ladite direction A d'avancée et conformé avec un bord de butée (11) à angle droit le long d'au moins un côté de celui-ci ;
- faire fléchir ladite piste fonctionnelle de transport de tranches (6a) suivant une première direction de fléchissement, autour d'un axe (x-x) parallèle à ladite direction A d'avancée, et sur un premier segment de son trajet de déplacement respectif, de façon à l'amener, de manière continue et graduelle, jusqu'à une position inclinée vers ledit bord de butée (11), suivant une inclinaison sensiblement proche de la verticale, dans laquelle seuls les centres de gravité des tranches défectueuses (3) sont situés à l'extérieur dudit bord (11), en faisant ainsi en sorte que lesdites tranches (3) quittent en chute libre ledit convoyeur (6a), tandis que les tranches convenables (2) sont retenues sur ladite piste fonctionnelle de transport de tranches (6a) par le bord de butée lui-même ;
- faire graduellement et continuellement fléchir ladite piste fonctionnelle de transport de tranches (6a) suivant une deuxième direction de fléchissement, autour dudit axe (x-x), opposée à ladite première direction de fléchissement, et sur un deuxième segment dudit trajet de déplacement, s'étendant en aval de ladite position d'inclinaison proche de la verticale, afin de la ramener à une position sensiblement horizontale.

2. Procédé selon la revendication 1, **caractérisé en ce que** ladite position d'inclinaison proche de la verticale est à au moins 80°.

3. Procédé selon la revendication 1, **caractérisé en ce que** ledit axe (x-x) est contenu dans le plan du convoyeur (6).

4. Appareil (1) pour trier individuellement et rejeter des tranches défectueuses de pain grillé (3) depuis des rangées parallèles de tranches (2, 3) entraînées continuellement, suivant une direction prédéterminée d'avancée, vers une station de conditionnement, lequel appareil comprend une pluralité de convoyeurs à courroies flexibles sans fins (6) comprenant une piste fonctionnelle de transport de tranches (6a), s'étendant suivant un trajet de déplacement sensiblement horizontal, ledit convoyeur (6) étant pourvu d'un bord de butée (11) à angle droit le long d'au moins un côté de celui-ci, chaque piste de transport de tranches (6a) s'étendant, au moins sur un segment dudit trajet de déplacement, dans une position proche de la verticale, inclinée vers ledit côté conformé avec le bord de butée (11), et des moyens (29, 34) étant prévus pour maintenir et guider chaque piste de transport de tranches (6a), sur ledit segment de trajet de déplacement, dans une position d'inclinaison donnée.

5. Appareil selon la revendication 4, **caractérisé en ce que** ledit angle d'inclinaison est approximativement de 80° relativement à l'horizontale.

6. Appareil selon la revendication 4, **caractérisé en ce que** lesdits moyens comprennent une pluralité de voies semblables à des plaques (34), de formes sensiblement rectangulaires, dont les grands côtés s'étendent dans la direction (A) d'avancée et sont conformés avec des bords de butée (11).

7. Appareil selon la revendication 6, **caractérisé en ce que** lesdites voies ont un angle d'inclinaison d'environ 80°.

8. Appareil selon la revendication 6, **caractérisé en ce que** lesdites voies sont supportées, approximativement à mi-chemin du trajet de déplacement, sur une pièce transversale semblable à une passerelle étendue sur la pluralité desdites pistes fonctionnelles de transport de tranches (6a).

9. Appareil selon la revendication 4, **caractérisé en ce que** lesdits moyens comprennent, en outre, des deuxièmes et troisièmes pluralités de voies semblables à des plaques (29, 37), supportant lesdites pistes fonctionnelles de transport de tranches (6a), supportées par des pièces transversales (31, 38) semblables à des passerelles respectives, s'étendant sous lesdites pistes fonctionnelles en des points respectivement au quart et aux trois quarts du chemin dudit trajet de déplacement.

10. Appareil selon la revendication 6, **caractérisé en ce que** lesdites voies sont identiques à celles de la première pluralité et sont disposées suivant un angle d'inclinaison d'environ 30° relativement à l'horizontale.
